# EUROPÄISCHE PATENTANMELDUNG

(11) **EP 1 793 478 A2**
(43) Veröffentlichungstag der Anmeldung: **06.06.2007**
(21) Anmeldenummer: 06023962.1
(22) Anmeldetag: 17.11.2006
(51) Int. Cl.: H02K 7/116, H02K 11/00

(54) **Stellvorrichtung**

(30) Priorität: 05.12.2005 DE 102005058178
(71) Anmelder: SICK STEGMANN GmbH, 78166 Donaueschingen (DE)
(72) Erfinder: Siraky, Josef, 78166 Donaueschingen (DE); Hartlieb, Rolf, 78050 Villingen-Schwenningen (DE); Maier, Josef, 78176 Blumberg/Opferdingen (DE)
(74) Vertreter: Patentanwälte Westphal, Mussgnug & Partner

(57) **Zusammenfassung**

Eine Stellvorrichtung zum Positionieren eines Stellelements weist einen Motor (18), der das Stellelement (10) antreibt, und eine Messeinrichtung auf, die den Stellweg des Stellelements zur Steuerung des Motors (18) direkt misst. Hierzu wird ein Zugseil (32) mit dem Stellelement verbunden und wird auf eine Trommel (36) aufgewickelt. Zur Messung des Stellweges des Stellelements wird die Drehstellung der Trommel (36) mittels eines Drehgebers (42) gemessen.

## Beschreibung

Die Erfindung betrifft eine Stellvorrichtung gemäß dem Oberbegriff des Patentanspruchs 1.

Solche Stellvorrichtungen dienen dazu, ein Stellelement auf einem linearen oder rotatorischen Stellweg exakt zu positionieren. Die Stellvorrichtung weist einen Motor auf, der ein Stellglied, z.B. eine Ausgangswelle antreibt, die wiederum über eine Wirkverbindung die Position des Stellelements beeinflusst. Eine Messeinrichtung misst eine Ist-Position, die zur Steuerung des Motors für die Positionierung des Stellelements verwendet wird.

Es ist bekannt, zur Messung der Ist-Position einen Drehgeber zu verwenden, der an die Welle des Motors oder an die Ausgangswelle der Stellvorrichtung gekuppelt wird. Der Drehgeber kann dabei die Drehung der Motorwelle bzw. der Ausgangswelle inkremental oder absolut messen. Die Drehbewegung der Motorwelle bzw. der Ausgangswelle muss über eine Wirkverbindung, z.B. Spindeln, Getriebe oder dergleichen in die lineare oder rotatorische Bewegung des Stellelementes umgesetzt werden. Da solche Spindeln und Getriebe ein Spiel, mechanische Toleranzen und dergleichen aufweisen, korrespondiert die tatsächliche Position des Stellelements nicht exakt mit der gemessenen Ist-Position der Motorwelle bzw. der Ausgangswelle. Eine Verbesserung der Positioniergenauigkeit kann nur durch Reduzierung solcher Toleranzen erreicht werden, was mit einem hohen mechanischen Aufwand verbunden ist.

Eine solche bekannte Stellvorrichtung zeigt die US 5 053 685. Der Motor treibt dort eine Mutter an, die eine Spindel als Stellglied linear bewegt. Die lineare Position dieses Stellgliedes wird innerhalb der Stellvorrichtung linear abgetastet und als Ist-Positionssignal zur Steuerung des Motors verwendet. Toleranzen und Fehler in der Übertragung der Bewegung des Stellgliedes auf das zu positionierende Stellelement können nicht erfasst werden.

Aus der US 4 121 504 ist eine Stellvorrichtung mit einem linear hydraulisch verschiebbaren Kolben bekannt, dessen Ist-Position durch eine Messeinrichtung bestimmt wird, die ein an dem Kolben befestigtes Zugseil aufweist, welches auf eine Trommel aufgewickelt wird. Ein mit der Welle der Trommel gekuppelter Drehgeber misst die Winkelstellung der Trommel und damit die Aufwickellänge des Zugseiles. Auch hier wird die Ist-Position des als Stellglied dienenden Kolbens erfasst. Fehler in der Wirkverbindung zwischen diesem Stellglied und dem durch dieses Stellglied betätigten Stellelements können nicht erfasst werden.

Der Erfindung liegt die Aufgabe zu Grunde, eine Stellvorrichtung für ein bewegbares Stellelement zu schaffen, welche mit geringem mechanischem Aufwand eine hohe Positioniergenauigkeit des Stellelements ermöglicht und flexibel für unterschiedliche Einsatzmöglichkeiten geeignet ist.

Diese Aufgabe wird erfindungsgemäß gelöst durch eine Stellvorrichtung mit den Merkmalen des Patentanspruchs 1.

Vorteilhafte Ausführungen der Erfindung sind in den Unteransprüchen angegeben.

Bei der erfindungsgemäßen Stellvorrichtung wird als Ist-Position für die Steuerung des Motors nicht eine Position der Stellvorrichtung gemessen, sondern die Ist-Position des durch die Stellvorrichtung zu betätigenden Stellelements selbst. Hierzu dient eine von dem Motor und dem durch den Motor antreibbaren Stellglied unabhängige Messeinrichtung, die ein auf eine Trommel aufwickelbares Zugseil aufweist, wobei die Drehposition der Trommel mittels eines Drehgebers erfasst wird. Das Zugseil ist mit seinem freien Ende aus der Stellvorrichtung herausgeführt und wird mit diesem freien Ende unmittelbar mit dem zu positionierenden Stellelement verbunden. Dadurch erhält man insbesondere zwei wesentliche Vorteile. Die Messung der Position des Stellelements selbst als Ist-Wert für die Steuerung des Motors macht die Genauigkeit der Positionierung des Stellelements unabhängig von Fehlern und Toleranzen in der Wirkverbindung zwischen dem durch den Motor antreibbaren Stellglied der Stellvorrichtung und dem zu positionierenden Stellelement. An diese Wirkverbindung, z.B. in Form von Getrieben, Spindeln oder dergleichen, müssen daher keine hohen Präzisionsanforderungen gestellt werden, so dass diese Wirkverbindung kostengünstig ausgebildet werden kann. Weiter kann die Stellvorrichtung sehr flexibel für die unterschiedlichsten Einsatzfälle verwendet werden. Der Motor, die Motorsteuerung und Messeinrichtung können eine kompakte universell verwendbare Stellvorrichtung bilden. Diese Stellvorrichtung weist das durch den Motor angetriebene Stellglied und das Zugseil der Messeinrichtung als mechanische Schnittstelle zu dem zu positionierenden Stellelement auf. Je nach den geometrischen Verhältnissen des Einsatzfalles und der Ausbildung des zu positionierenden Stellelements kann die Wirkverbindung zwischen dem angetriebenen Stellglied und dem Stellelement ausgebildet werden. Da das Zugseil flexibel ist und beliebig umgelenkt werden kann, schränkt die Messeinrichtung die Anordnung und den Einbau der Stellvorrichtung und die Wirkverbindung zwischen der Stellvorrichtung und dem zu positionierenden Stellelement nicht ein.

In einem vorteilhaften Anwendungsfall ist der Motor mit seiner Welle achsparallel zu einer das Stellelement antreibenden Spindel angeordnet. Das Gehäuse der Stellvorrichtung mit dem Motor und der Messeinrichtung kann dabei achsparallel seitlich an ein Stellgehäuse angebaut werden, welches die Spindel und das Stellelement aufnimmt. Das mit dem Stellelement verbundene Zugseil wird dabei in dem Stellgehäuse parallel zu der Spindel geführt, tritt stirnseitig aus dem Stellgehäuse aus, wird um 180° umgelenkt und tritt parallel in das Gehäuse der Stellvorrichtung ein, in welchem es auf die mit dem Drehgeber gekuppelte Trommel läuft. Die gesamte Anordnung bildet auf diese Weise eine kompakte geschlossene Baueinheit, deren Längenabmessung im Wesentlichen nur durch die Länge des Stellweges des Stellelements bestimmt ist.

Im Folgenden wird die Erfindung anhand eines in der Zeichnung dargestellten Ausführungsbeispiels näher erläutert. Es zeigen
- Fig. 1: eine perspektivische Ansicht der Stellvorrichtung mit teilweise geöffnetem Gehäuse,
- Fig. 2: die Stellvorrichtung mit zusätzlich entfernten Gehäuseteilen,
- Fig. 3: eine Teilansicht der Messeinrichtung der Stellvorrichtung,
- Fig. 4: ein Anwendungsbeispiel der Stellvorrichtung und
- Fig. 5: das Anwendungsbeispiel der Figur 4 mit geöffnetem Gehäuse.

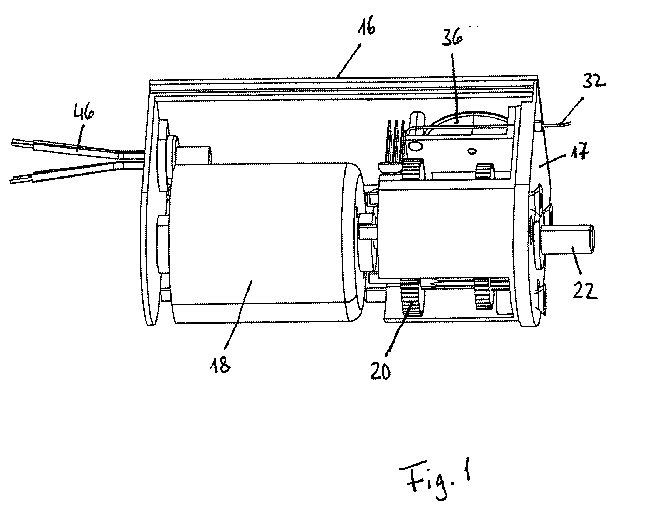

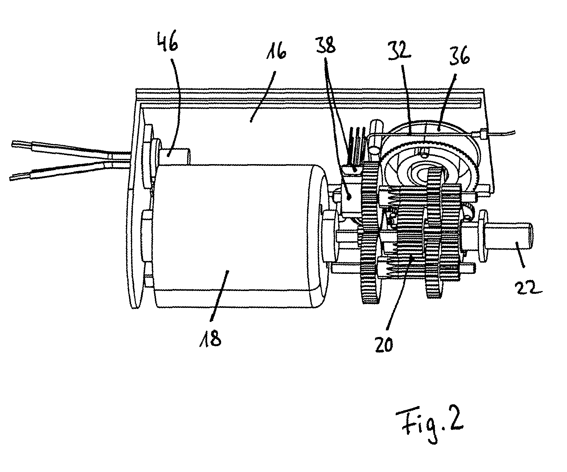

In den Figuren 1 bis 3 ist die Stellvorrichtung gezeigt, die eine in einem Gehäuse 16 eingeschlossene kompakte Baueinheit bildet. Dabei sind in Figur 1 ein zeitlicher Deckel des Gehäuses 16 und in Figur 2 dieser seitliche Deckel und eine Endstirnfläche 17 des Gehäuses 16 entfernt, um den inneren Aufbau der Stellvorrichtung sichtbar zu machen.

In dem Gehäuse 16 ist ein elektrischer Motor 18 so angeordnet, dass seine Welle 19 in Längsrichtung des Gehäuses 16 verläuft. Der Motor 18 treibt ein Untersetzungs-Zahnradgetriebe 20 an, dessen Ausgangswelle 22 als Stellglied achsparallel zur Welle 19 des Motors aus der Endstirnfläche 17 des Gehäuses 16 herausragt.

Weiter ist in dem Gehäuse 16 zwischen der Stirnseite des Motors 18 und der Endstirnfläche 17 des Gehäuses 16 eine Trommel 36 angeordnet, die um eine zur Seitenfläche des Gehäuses 16 und zur Achse des Motors 18 senkrechte Achse drehbar gelagert ist. Die Trommel 36 befindet sich zwischen dem Zahnradgetriebe 20 und der Seitenwand des Gehäuses 16. Auf die Trommel 36 ist ein Ende eines Zugseiles 32 aufgewickelt, welches neben der Ausgangswelle 22 durch die Endstirnfläche 17 aus dem Gehäuse 16 herausgeführt ist. Koaxial in der Trommel 36 ist eine Triebfeder 48 angeordnet, die die Trommel 36 in Aufwickelrichtung des Zugseiles 32 vorspannt und dadurch das Zugseil 32 gespannt hält.

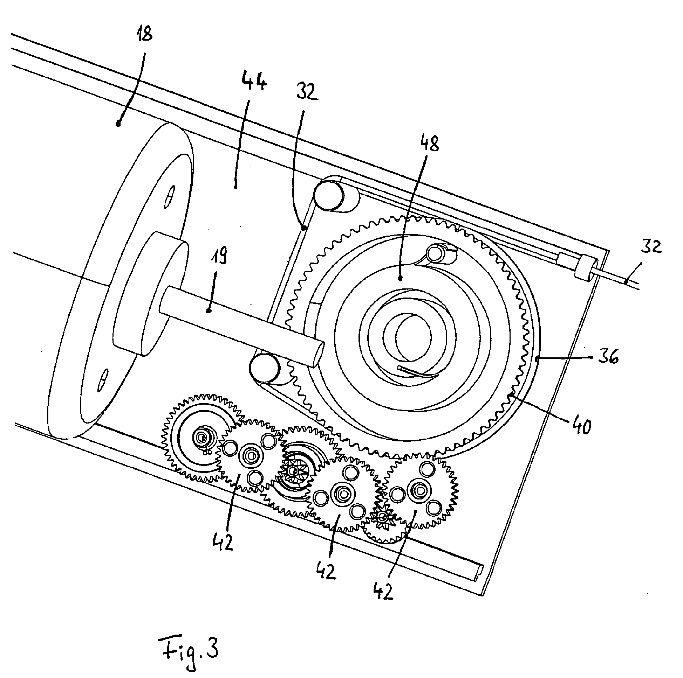

Wie am deutlichsten in Figur 3 zu sehen ist, in welcher das Zahnradgetriebe 20 weggelassen ist, weist die Trommel 36 an einem stirnseitigen Umfangsrand eine Außenverzahnung 40 auf, die mit einem Drehgeber 42 in Zahneingriff steht. Der Drehgeber 42 ist als Multiturn-Drehgeber ausgebildet, d. h. der Drehgeber 42 misst die exakte Winkelposition der Trommel 36 über mehrere Umdrehungen. Ein solcher Multiturn-Drehgeber gehört zum bekannten Stand der Technik. In Figur 3 sind die über Untersetzungsverzahnungen hintereinander geschalteten Stufen des Drehgebers 42 deutlich zu sehen.

Der Drehgeber 42 und seine elektronische Verschaltung sind auf einer Leiterplatte 42 angeordnet, die in dem Gehäuse 16 parallel an dessen Seitenwand anliegend montiert ist. Die Leiterplatte 44 trägt auch die Elektronik für die Ansteuerung des Motors 18 und einen für die Kommutierung des Motors 18 dienenden Geber 38. Die Stromzuführung für den Motor 18 der Elektronik erfolgt über Kabel 46 durch die der Endstirnfläche 17 entgegengesetzte Stirnfläche des Gehäuses 16.

Die Stellvorrichtung kann zur Positionierung eines beliebigen Stellelements verwendet werden. Durch eine dem jeweiligen Anwendungsfall angepasste Wirkverbindung wird die Drehung der Ausgangswelle 22 in eine lineare oder rotatorische Bewegung des Stellelements umgesetzt. Das aus dem Gehäuse 16 herausgeführte freie Ende des Zugseiles 32 wird mit diesem Stellelement verbunden, wobei das Zugseil 32 je nach der Konfiguration von Stellvorrichtung und Stellelement umgelenkt werden kann. Das Zugseil 32 folgt spielfrei der Bewegung des Stellelements 10. Diese Bewegung wird durch das Zugseil 32 spielfrei in die Drehbewegung der Trommel 36 umgesetzt, da das Zugseil 32 durch die Triebfeder 48 gespannt gehalten wird. Der Drehgeber 42 misst somit die exakte Ist-Position des Stellelements 10. Entsprechend dieser vom Drehgeber 42 gemessenen Ist-Position wird der Motor 18 gesteuert, so dass eine exakte Positionierung des Stellelements durch den Motor 18, das Zahnradgetriebe 20, die Ausgangswelle 22 und die Wirkverbindung möglich ist, ohne dass ein mechanisches Spiel oder sonstige Fehler in dieser Antriebskette vom Motor 18 bis zu dem Stellelement einen Einfluss auf die Positionsregelung und damit die Genauigkeit der Positionierung des Stellelements hat.

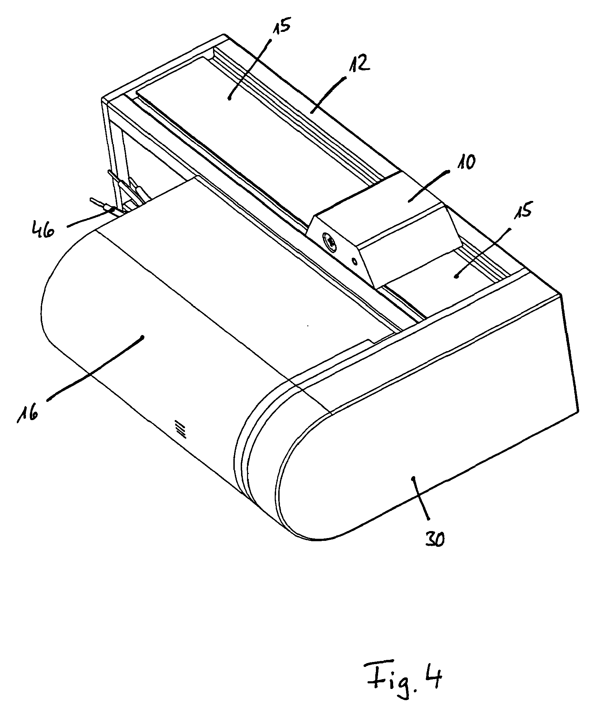

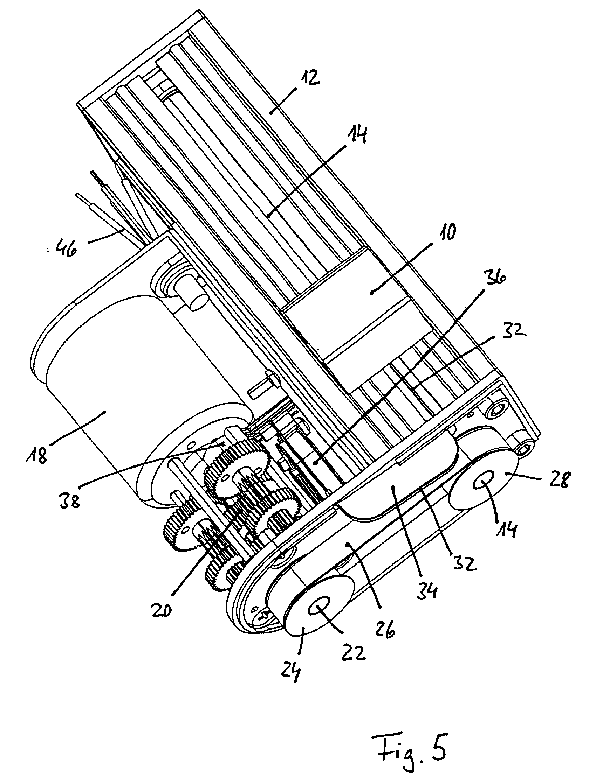

In den Figuren 4 und 5 ist ein Anwendungsbeispiel für die Stellvorrichtung der Figuren 1 bis 3 gezeigt. Figur 4 zeigt dabei die Ausführung in geschlossener Form, während in Figur 5 Gehäuseteile entfernt sind, um den Aufbau sichtbar zu machen.

Die Stellvorrichtung betätigt ein Stellelement 10, welches eine beliebige für die Erfindung nicht maßgebende Funktion erfüllt. Das Stellelement 10 ist linear bewegbar geführt in einem Stellgehäuse 12, welches die Form eines langgestreckten Quaders hat und z.B. durch ein Aluminium-Profil gebildet ist. Axial in dem Stellgehäuse 12 ist eine Spindel 14 drehbar gelagert, auf welcher das Stellelement 10 mittels einer Spindelmutter bewegbar ist. Ein Abdeckband 15 schließt das Stellgehäuse 12 im Bereich der Bahn des Stellelementes 10 dichtend ab.

An einer Längsseitenwand des Stellgehäuses 12 ist das Gehäuse 16 der Stellvorrichtung angebaut. Eine Endstirnfläche des Stellgehäuses 12 ist mit der Endstirnfläche 17 des Gehäuses 16 flächenbündig angeordnet.

Auf dem als Stellglied über die Endstirnfläche 17 aus dem Gehäuse 16 herausragenden Ende der Ausgangswelle 22 sitzt eine gezahnte Riemenscheibe 24, welche über einen endlosen Zahnriemen 26 eine gezahnte Riemenscheibe 28 antreibt, die drehfest auf dem stirnseitig aus dem Stellgehäuse 12 herausgeführten Ende der Spindel 14 sitzt. Der Motor 18 treibt somit über das Zahnradgetriebe 20 und den Zahnriemen 26 die Spindel 14 drehend an, wodurch das mit einer Mutter auf der Spindel 14 sitzende Stellelement 10 linear verschoben wird. Eine Endkappe 30 überdeckt die Riemenscheiben 24 und 28 und den Zahnriemen 26 und verschließt die Stirnseiten des Stellgehäuses 12 und des Gehäuses 16.

In dem Stellgehäuse 12 ist an dem Stellelement 10 das Zugseil 32 mit seinem freien Ende befestigt. Das Zugseil 32 verläuft parallel zu der Spindel 14 in dem Stellgehäuse 12 und tritt an dessen Stirnseite oberhalb der Riemenscheibe 28 aus dem Stellgehäuse 12 aus. An den Stirnseiten des Stellgehäuses 12 und des Gehäuses 16 ist ein Führungsschuh 34 angebracht, der an seinem Außenrand eine Führungsnut aufweist. Das aus dem Stellgehäuse 12 austretende Zugseil 32 läuft in dieser Führungsnut des Führungsschuhs 34 und wird durch den Führungsschuh 34 umgelenkt, so dass das Zugseil 32 achsparallel zur Spindel 14 und der Ausgangswelle 22 um insgesamt 180° umgelenkt in die Endstirnfläche 17 des Gehäuses 16 eintritt. Auch der Führungsschuh 34 und das auf diesem laufenden Zugseil 32 werden durch die Endkappe 30 abgedeckt.

### Bezugszeichenliste

- 10: Stellelement
- 12: Stellgehäuse
- 14: Spindel
- 15: Abdeckband
- 16: Gehäuse
- 17: Endstirnfläche
- 18: Motor
- 19: Welle
- 20: Zahnradgetriebe
- 22: Ausgangswelle
- 24: Riemenscheibe
- 26: Zahnriemen
- 28: Riemenscheibe
- 30: Endkappe
- 32: Zugseil
- 34: Führungsschuh
- 36: Trommel
- 38: Geber
- 40: Außenverzahnung
- 42: Drehgeber
- 44: Leiterplatte
- 46: Kabel
- 48: Triebfeder

## Patentansprüche

1. Stellvorrichtung mit einem Motor (18), mit einem Stellglied (22), das durch den Motor (18) antreibbar ist und durch das ein Stellelement (10) positionierbar ist, und mit einer Messeinrichtung zur Bestimmung einer Ist-Position für die Steuerung des Motors (18),
**dadurch gekennzeichnet, dass** die Messeinrichtung ein Zugseil (32), eine Trommel (36), auf welche ein Ende des Zugseiles (32) aufwickelbar ist, und einen mit der Trommel (36) gekuppelten Drehgeber (42) aufweist, wobei das andere Ende des Zugseiles (32) aus der Stellvorrichtung herausgeführt und mit dem Stellelement (10) verbindbar ist.

2. Stellvorrichtung nach Anspruch 1,
**dadurch gekennzeichnet, dass** der Drehgeber (42) ein Multiturn-Drehgeber ist.

3. Stellvorrichtung nach Anspruch 1oder 2,
**dadurch gekennzeichnet, dass** der Motor (18), ein Getriebe (20) des Motors und die Messeinrichtung in einem gemeinsamen Gehäuse (16) aufgenommen sind.

4. Stellvorrichtung nach Anspruch 3,
**dadurch gekennzeichnet, dass** der Drehgeber (42) und die Elektronik zur Steuerung des Motors (18) auf einer gemeinsamen Leiterplatte (44) in dem Gehäuse (16) angeordnet sind.

5. Stellvorrichtung nach einem der vorhergehenden Ansprüche,
**dadurch gekennzeichnet, dass** der Motor (18) über ein Getriebe (20, 24, 26, 28) eine Spindel (14) anteibt, auf der sich das Stellelement (10) bewegt.

6. Stellvorrichtung nach Anspruch 5,
**dadurch gekennzeichnet, dass** der Motor (18) mit zur Spindel (14) paralleler Welle (19) angeordnet ist.

7. Stellvorrichtung nach wenigstens den Ansprüchen 3, 5 und 6,
**dadurch gekennzeichnet, dass** das den Motor (18) und die Messeinrichtung aufnehmende Gehäuse (16) achsparallel an einer Seitenwand eines die Spindel (14) und das Stellelement (10) aufnehmenden Stellgehäuses (12) angebaut ist.

8. Stellvorrichtung nach Anspruch 7,
**dadurch gekennzeichnet, dass** das Zugseil (32) in dem Stellgehäuse (12) parallel zur Spindel (14) läuft, an der Stirnseite aus dem Stellgehäuse (12) austritt, um 180° umgelenkt wird und stirnseitig in das Gehäuse (16) eintritt.
